(19) Europäisches Patentamt

European Patent Office

Office européen des brevets

(11) EP 1 522 420 A1

(12) EUROPEAN PATENT APPLICATION

(43) Date of publication:
13.04.2005 Bulletin 2005/15

(51) Int Cl.⁷: **B44C 1/14**

(21) Application number: 04023065.8

(22) Date of filing: 28.09.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 07.10.2003 JP 2003348004

(71) Applicant: **Aisin Seiki Kabushiki Kaisha Kariya-shi, Aichi-ken 448-8650 (JP)**

(72) Inventors:
• **Maruyama, Kota Aisin Seiki Kabushiki Kaisha Kariya-shi Aichi-ken 448-8650 (JP)**

• **Yagi, Wataru Aisin Seiki Kabushiki Kaisha Kariya-shi Aichi-ken 448-8650 (JP)**
• **Ieda, Kiyokazu Aisin Seiki Kabushiki Kaisha Kariya-shi Aichi-ken 448-8650 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Door handle apparatus**

(57) A door handle apparatus includes a handle body (2) attached to a door, a cover (4) made of resin attached to the handle body and including a design layer (6) decorated metallic like color tone and an antenna portion (3) attached to a space formed between the handle body and the cover and having at least one of transmitting function and receiving function. The decorative layer of the cover includes a metallic microparticle paint layer (66) formed by depositing metallic microparticles by painting.

# F I G. 3

**Description**

FIELD OF THE INVENTION

This invention generally relates to a door handle apparatus adapted to a vehicle or a building, more particularly, to a door handle apparatus having an antenna.

BACKGROUND

JP2002-036799A2 discloses decorative parts such as a cabinet frame. The cabinet frame is made of transparent resin material. Colored or shiny micro flakes are dispersed and stuck on the frame with adhesive. After that, the frame is painted in many kind of colors.

JP2002-030844A2A, JP2001-345615A2 and JP1998-308149A2 discloses a door handle apparatus having a handle body attached to a door, a cover made of resin and having a metallic plating layer for covering the door handle, and an antenna.

JP2002-030844A2 discloses the apparatus having the antenna for a vehicle for opening and closing the door. The apparatus for opening and closing the door includes the door handle for opening and closing the door and the antenna and a sensor electrode provided at the door handle. JP2001-345615A2 discloses the antenna built in the door handle having a core of bar antenna made of soft magnetic ferrite. JP1998-308149A2 discloses a human approach detection sensor for the door handle of a vehicle having parallel cable electrodes.

Here, the decorative parts disclosed in JP2002-036799A2 is not related to the door handle apparatus, more particularly, not related to the door handle apparatus having the antenna, further particularly, not related to the handle apparatus having a purpose of reducing a loss of an antenna output. The inventions disclosed in JP2002-030844A2, JP2001-345615A2, and JP1998-308149 are aimed for the door handle apparatus having the antenna, but they are not aimed for reducing the loss of antenna output.

The door handle apparatus is needed to be light weighted, and to be good designed with shiny and metallic luster. The design of the door handle is conventionally improved by forming a decorative layer by spraying a paint including pigment over the handle body and the cover. However, the decorative layer formed by spraying the paint including pigment does not show shiny and metallic luster. Therefore, improvement in design is still needed.

An wet and electrical plating method has been challenged to form shiny and metallic luster plating layer as the decorative layer on the surface of the handle body and the cover. Using this method, the surface is covered with the metallic plating layer, and shows shiny and metallic luster. However, a radiating surface of the antenna is covered with an electric conductor, which causes a loss of the antenna output.

A need thus exists for a door handle apparatus having an antenna, showing shiny and metallic luster, being good designed, and having advantages of reducing a loss of an antenna output.

SUMMARY OF THE INVENTION

According to an aspect of the present invention, a door handle apparatus includes a handle body (2) attached to a door, a cover (4) made of resin attached to the handle body and including a design layer (6) decorated metallic like color tone and an antenna portion (3) attached to a space formed between the handle body and the cover and having at least one of transmitting function and receiving function. The decorative layer of the cover includes a metallic microparticle paint layer (66) formed by depositing metallic microparticles by painting. The shiny design layer of the cover is obtained by depositing the microparticles and forming the metallic microparticle paint layer by painting method. The handle apparatus has advantages of reducing loss of the antenna output as well as the shiny metallic design.

BRIEF DESCRIPTION OF THE DRAWINGS

The foregoing and additional features and characteristics of the present invention will become more apparent from the following detailed description considered with reference to the accompanying drawings, wherein:

Fig. 1 shows a perspective illustration of a disassembled door handle apparatus.

Fig. 2 shows an assembled door handle apparatus.

Fig. 3 shows a cross sectional view showing a cross-sectional structure of a decorative layer formed on a cover of the door handle apparatus.

Fig. 4 shows a schematic diagram of an antenna portion of the door handle apparatus.

Fig. 5 shows a picture taken by an electron microscope showing the observed decorative layer formed on the cover of the door handle apparatus (at magnification of 1000× ).

Fig. 6 shows a picture taken by the electron microscope showing the observed decorative layer formed on the cover of the door handle apparatus (at magnification of 1000× ).

Fig. 7 shows a cross-sectional view showing a cross-sectional structure of the decorative layer formed on the cover of the door handle apparatus.

Fig. 8 shows a table showing test results of test samples.

Fig. 9 shows a graph showing relative antenna output (dB) of the test samples.

Fig. 10 shows a graph showing Q values of the test samples.

Fig. 11 shows a graph showing a change of a capacitance between before and after inserting an end of the finger into the test samples.

DETAILED DESCRIPTION

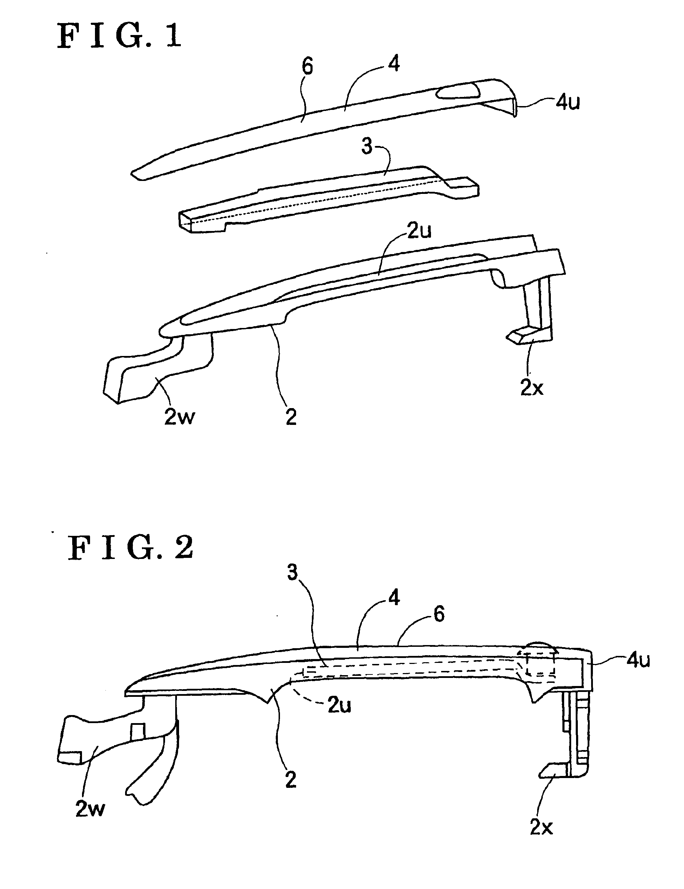

One embodiment of the present invention will be explained with reference to Fig. 1-4. The embodiment shows that the present invention is applied to a door handle apparatus for a vehicle, such as an automobile. The door handle apparatus is attached to a door body (made of metal) of the vehicle having a keyless entry system. The door handle apparatus includes a handle body 2 which functions as a base body, an antenna portion 3 attached to the handle body 2 and having functions of transmission, and a cover 4 facing and covering the antenna portion 3 and covering the handle body 2. The handle body 2 includes an accommodating space 2u and engaging portions 2w, 2x engaged to the door body of the vehicle. The cover 4 includes an engaging portion 4u engaged with the handle body 2.

The handle body 2 and the cover 4 is, but not limited to, a resin-based injection mold product formed from mixture of resin (polycarbonate/polybutylene terephthalate) and 10% by weight of glass filler, so called "PC/PBT Glass Filler 10%".

The cover 4 is frequently seen by people. Therefore, the resin-based cover 4 includes decorative layer 6 showing metallic luster for improving design.

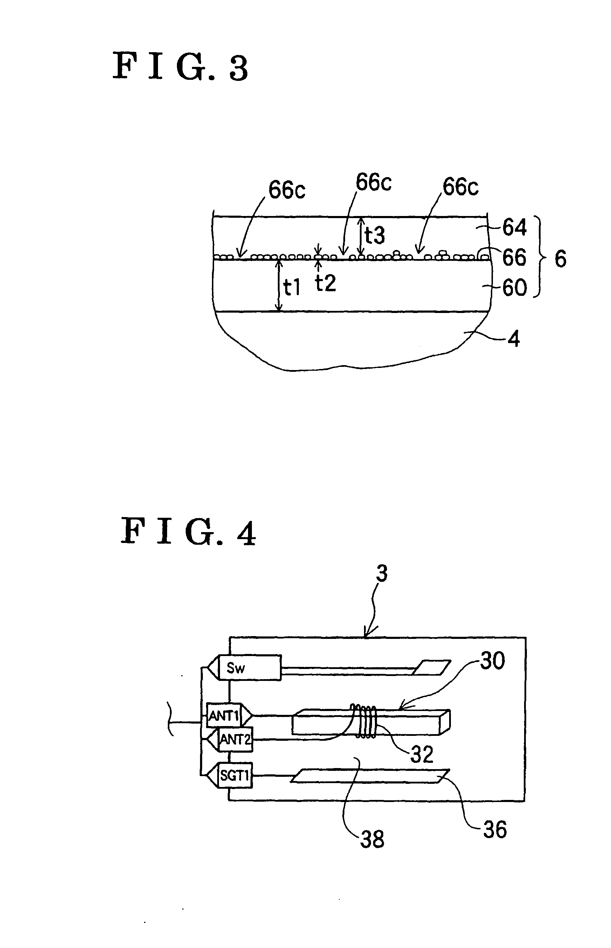

The decorative layer 6 formed on the cover 4 facing the antenna portion 3 includes multiple layers. Fig. 3 shows a cross-sectional view of the decorative layer 6 in thickness direction. As shown in Fig. 3, the decorative layer 6 of the cover 4 is formed of an undercoat layer 60 for covering a surface of the cover 4, a metallic microparticle paint layer 66 as a surfacer layer formed on the undercoat layer 60, and a topcoat layer 64 formed on the metallic microparticle paint layer 66.

Forming method of the decorative layer 6 described above will be explained as follows. A surface of the mold product to be the cover 4 was degreased by organic solvent. Resin paint as primer paint to be the undercoat layer 60 was sprayed on the surface of the mold product. The resin paint was two-component acryl urethane based paint, whose dilution ratio by weight is base : hardener : solvent (thinner) = 100 : 10 : 60. Next, a paint including base mainly including shiny metallic aluminum microparticles and acryl resin dissolved in the solvent (thinner) was sprayed on the undercoat layer 60 for forming the metallic microparticle paint layer 66 as a surfacer layer. Dilution ratio of the paint by weight was base : solvent (thinner) = 100 : 70. Next, the mold product was heated at 80 °C for 40 minutes for drying and baking the metallic microparticle paint layer 66 as the surfacer layer. Next, resin paint (two-component acryl urethane paint) was sprayed on the metallic microparticle paint layer 66 for forming the transparent topcoat layer 64 thereon. The resin paint forming the topcoat layer 64 mainly includes two-component acryl urethane based paint. Dilution ratio of the resin paint was base : hardener : solvent (thinner) =100 : 10 : 60. Next, the mold product was heated at 80 °C for 40 minutes for drying and baking the topcoat layer 64.

In Fig. 3, an average thickness t1 of the undercoat layer 60 was 1-5 micrometer, an average thickness t2 of the metallic microparticle paint layer 66 as the surfacer layer was 1-5 micrometer, particularly 2 micrometer. An average thickness t3 of the topcoat layer 64 was 10-17 micrometer, particularly 15 micrometer. Accordingly, a thickness of the metallic part in the decorative layer 6 is less than or equal to 5 micrometer.

The shiny metallic microparticles were powder particles obtained from an aluminum deposition layer crushed into a flat-shaped metallic aluminum powder having average particle diameter 5-30 micrometer and thickness 0.1-1 micrometer. Here, larger average particle diameter of the metallic microparticle tends to degrade an easiness of spraying. On the other hand, smaller average particle size of the metallic microparticle tends to degrade shininess of the metallic microparticle. Considering as above mentioned tendency, the average particle diameter of the metallic microparticle was determined as described above.

The flat shape of the metallic microparticle contributes to decrease the thickness of the metallic microparticle paint layer 66 without loss of shininess of the metallic microparticle. The decrease in thickness of the metallic microparticle paint layer 66 contributes to reduce the attenuation of the electromagnetic wave transmitted from the antenna portion 3.

An observation of the metallic microparticle paint layer 66 by a scanning electron microscope shows that a partially discontinuous portion 66c of the aluminum metallic microparticle is formed at the metallic microparticle paint layer 66. Further, an observation of the metallic microparticle paint layer 66 by an EPMA (electron probe X-lay microanalysis) also shows an empty space of aluminum at the metallic microparticle paint layer 66. It is assumed that continuation of the metallic microparticle paint layer 66 in surface direction is reduced by the discontinuous portion 66c. The discontinuous portion 66c is assumed to have advantage to reduce conductivity or permeability of the metallic microparticle paint layer 66.

Fig. 4 shows a relevant part of the antenna portion 3. As shown in Fig. 4, the antenna portion 3 includes a core portion 30 and a conductor wire 32 coiled about an outer surface of the core portion 30. The core portion 30 was Mn-Zn series ferrite core sized 5.2mm in width, 2.3mm in thickness, 60.5 mm in length. Further, a conductive sensor electrode 36 (made of bronze) is provided facing the core portion 30. Between the core portion 30 and the sensor electrode 36, an insert space 38 is formed for being inserted by an end of the finger of a user. Insertion of the end of the finger into the insert space 38 causes change of capacitance of the insert space 38, which enables detection of insertion of the end of the finger.

In use, electricity is supplied to the conductor wire 32 of the antenna portion 3 for transmitting electromagnetic wave from the antenna portion 3. Thus, when the electromagnetic wave is transmitted from the antenna portion 3, an electronic key, or the like, held by the user approaching the door handle apparatus receives the electromagnetic wave transmitted from the antenna portion 3. Further, a receiving apparatus provided at the antenna portion 3 side receives electromagnetic wave transmitted from the electric key. Therefore, an approach of the user to the door handle apparatus is detected and an identification (ID) of the user is certified. If the user identification is certified as a registered user, the door is set to open and close as shown in following. In other words, when the user inserts the end of the finger to the insert space 38 to operate the door handle apparatus, the capacitance of the insert space 38 is changed. Thus, an intention of the user to open and close the door is detected. Then, a lock apparatus is operated to unlock a door apparatus. On the other hand, in case the user is not certificated as the registered user, even when the end of the finger of the user approaches the core portion 30, the door apparatus remains to be locked. As mentioned above, when a requirement of ID certification based on the electromagnetic wave transmitted from the antenna portion 3 and a requirement of detection of user's intention to open the door based on the change of the capacitance are satisfied, the door handle apparatus is unlocked.

Products according to the embodiment 1 of the present invention was tested. Further, the door handle apparatus for comparative samples (test sample No. 1, No. 3, No. 6, No. 7) were also made.

According to the test sample No. 1 as the comparative sample, the handle body 2 and the cover 4 is painted with a paint including white pigment (titanium oxide). The paint thickness of both the handle body 2 and the cover 4 is 30 micrometer. According to the test sample No. 3 as the comparative sample, the handle body 2 is painted with the paint including white pigment (titanium oxide) about 30 micrometer in paint thickness, and the cover 4 is a metallic plated product about 100 micrometer in metallic plating thickness.

According to the test sample No. 4 based on the present invention, the handle body 2 is a painted product including the thick metallic microparticle paint layer 66, 20 micrometer in average thickness, and the cover 4 is a painted product including the metallic microparticle paint layer 66, 20 micrometer in average thickness.

According to the test sample No. 5 based on the present invention, the handle body 2 is a painted product including the metallic microparticle paint layer 66, 20 micrometer in average thickness, and the cover 4 is a painted product including the metallic microparticle paint layer 66, 20 micrometer in average thickness.

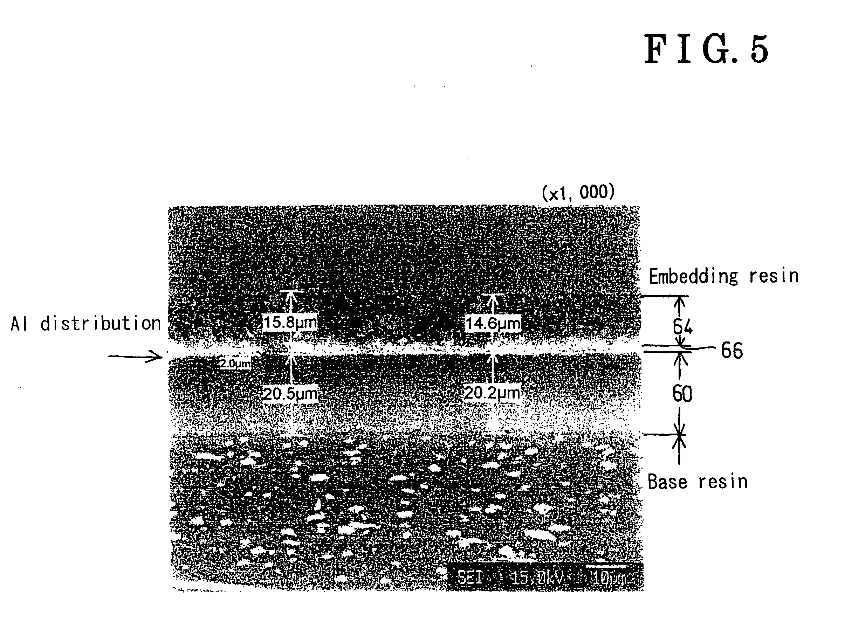

Fig. 5 shows a picture taken by the scanning electron microscope (magnification is 1000×) showing an observed cross-sectional structure of the decorative layer 6 formed at the cover 4 according to the test sample No. 2 based on the present invention. As shown in Fig. 5, the decorative layer 6 according to the test sample No. 2 is formed of the undercoat layer 60 (thickness : 20.2 micrometer, 20.5 micrometer) formed on and covering the surface of a base material of the cover 4, the metallic microparticle paint layer 66 (thickness : 2 micrometer) formed on the undercoat layer 60, and the topcoat layer 64 (thickness : 15.8 micrometer, 14.6 micrometer) formed on the metallic microparticle paint layer 66.

As shown in the picture observed by the electron microscope shown in Fig. 5, partially formed discontinuation of the metallic microparticle is shown at the thin metallic microparticle paint layer 66 of the decorative layer 6 formed at the cover 4. According to the test sample No. 2, the handle body 2 includes the decorative layer 6 as same layered structure and thickness as the cover 4, in other words, the handle body 2 includes the undercoat layer 60 (thickness 20 micrometer) formed on the surface of the resin base body, the metallic microparticle paint layer 66 (thickness 2 micrometer) formed on the undercoat layer 60, and the topcoat layer 64 (thickness 15 micrometer) formed on the metallic microparticle paint layer 66.

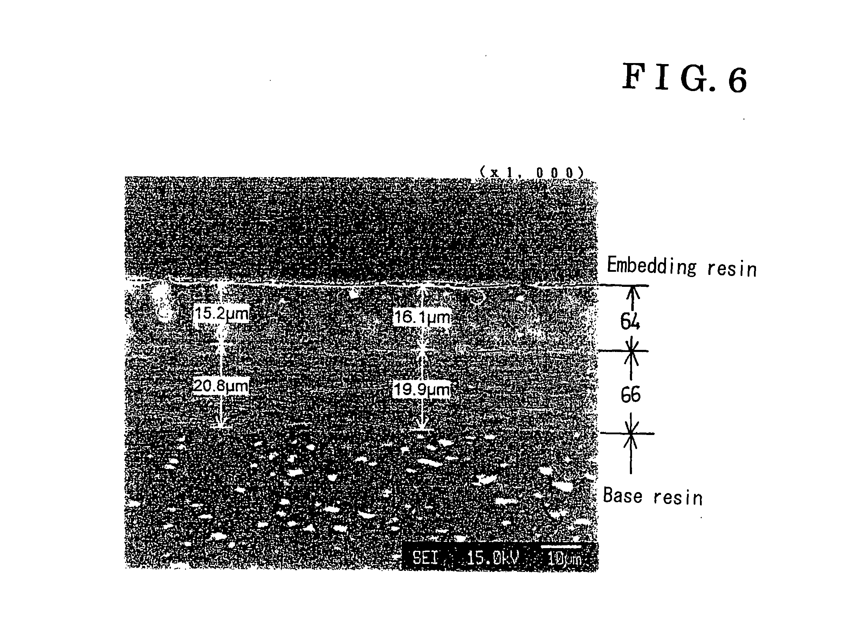

Fig. 6 shows a picture taken by the scanning electron microscope (magnification 1000 ×) showing an observed cross-sectional structure of the decorative layer 6 formed at the cover 4 of the test sample No. 4 based on the present invention. As shown in Fig. 6, the decorative layer 6 of the test sample No. 4 does not include the undercoat layer 60. The decorative layer 6 includes the metallic microparticle paint layer 66 (thickness 20.8 micrometer, 19.9 micrometer) formed on the surface of the resin base body and the topcoat layer 64 (thickness 15.2 micrometer, 16.1 micrometer) formed on the metallic microparticle paint layer 66.

According to the picture taken by the electron microscope shown in Fig. 6, many linear gaps (length : about 10-25 micrometer), in other words, discontinuous portions are observed in the metallic microparticle paint layer 66 of the test sample No. 4 even though the thickness of the metallic microparticle paint layer 66 is comparatively large as about 20 micrometer. As thus, the metallic microparticle paint layer 66 based on the test sample No. 4 includes many discontinuous portions, which decreases the continuity of the metallic microparticle paint layer 66 in surface direction, which may decrease the conductivity of the metallic microparticle paint layer 66.

According to the test sample No. 6 as the comparative sample, the handle body 2 is painted with a paint including white pigment (titanium oxide), and the cover 4 is a colored resin product. According to the test sample No. 7 as the comparative sample, the handle body 2 is a plated product including a metallic plating layer, and the cover 4 is a colored resin product.

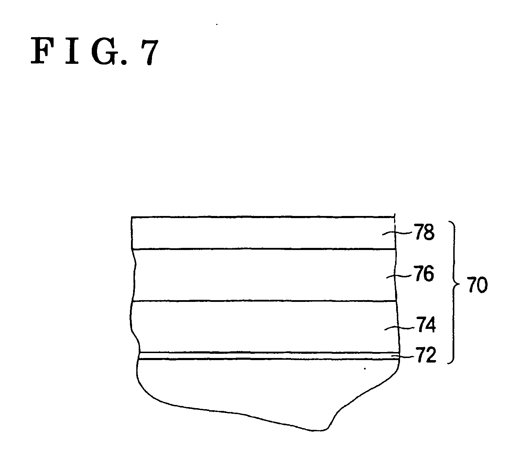

Fig. 7 shows a cross-sectional structure of the metallic plating layer of the test sample No. 3 and No. 7 as metallic plated products. A metallic plating layer 70 based on the test sample No. 3 and No. 7 includes layers of a nickel plating layer 72 (average thickness 1-5 micrometer), a copper plating layer 74 (average thickness 20-30 micrometer), a nickel plating layer 76 (average thickness 20-30 micrometer), and a chromium plating layer 78 (average thickness 10 micrometer). The thickness of the metallic portion of the metal plating layer 70 is about 60-100 micrometer.

The metallic plating layer 70 was formed as follows. A molded product to be the cover 4 was degreased with organic solvent. The nickel plating layer 72 was formed on the surface of the molded product by an electroless plating method. The copper plating layer 74 was formed on the nickel plating layer 72 by an wet electroplating method. The nickel plating layer 76 was formed on the copper plating layer 74 by the wet electroplating method. The chromium plating layer 78 was formed on the nickel plating layer 76 by the wet electroplating method.

The test samples No.1-No.7 were tested. In this test, an inductance and the capacitance of the antenna portion 3 were oscillated at 130 kHz for transmitting the electromagnetic wave. The antenna output (radiation field strength) was measured at a distance of 3 m from the antenna portion (Reference to Ministry of Posts and Telecommunications of Japan, Announcement No. 127). Further, quality factor of an antenna coil (described as Q) was measured as an electromagnetic property of the antenna portion 3 by an impedance analyzer. Q (quality factor), reciprocal number of a loss coefficient, is obtained from a real part of the impedance $R(\Omega)$ and imaginary part of the impedance $X(\Omega)$ through an equation $Q = X / R$. Generally, small Q factor tends to increase an electric consumption of the circuit. Accordingly, larger Q value is preferable.

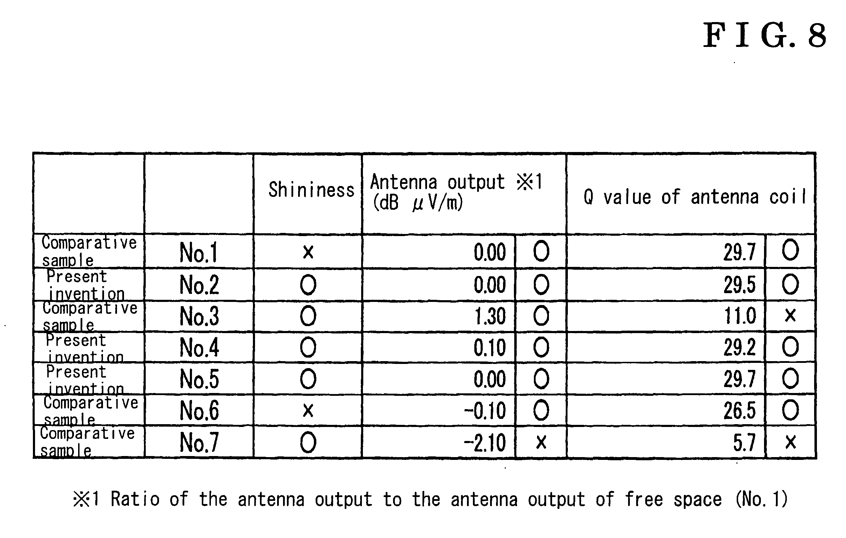

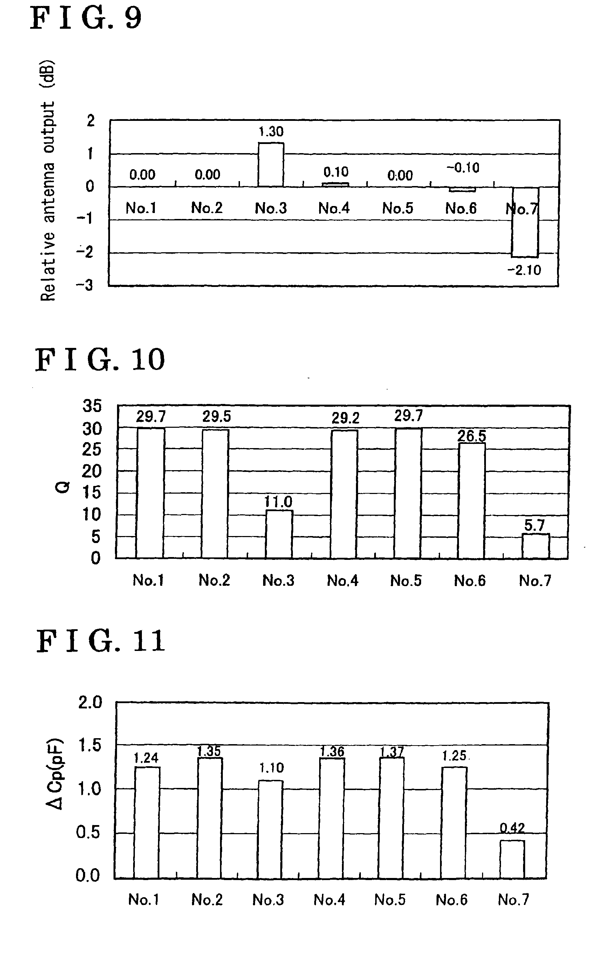

Fig. 8-Fig. 10 show test results. Fig. 8 shows shininess, the antenna output relative to that of the test sample No. 1, and Q of the antenna coil of the test samples. Fig. 9 shows test results of the antenna output ratio to that of the test sample No. 1. The test result of the test sample No. 1 may be considered as the test result in the free space because the both handle body and the cover are painted with paint including white pigment (titanium oxide), which does not influences electromagnetic wave transmitted from the antenna. Fig 10 shows test results of Q of the antenna coil. According to the test sample No. 1 as the comparative sample, both the antenna output and the Q value of the antenna coil was good. Q was 29.7 and the loss of the antenna output was small. However, the test sample No. 1 does not show shininess and metallic luster, consequently the design was unsatisfactory.

Further, the antenna output and the Q of the antenna coil of the test sample No. 2 based on the present invention was comprehensively good. Radiation field strength was as same as that of the test sample No. 1.

In addition, Q was as same as that of the test sample No. 1, 29.5. And the loss of the antenna output was small. Further, the test sample No. 2 based on the present invention shows satisfactory shininess and metallic luster as well as the small loss of the antenna output.

On the contrary, the test result of the test sample No. 3 as the comparative sample with the metallic plating layer 70 formed on the cover 4 was not good, showing low Q (11.0) of the antenna coil, in other words, high loss of the antenna output as shown in Fig. 10. Further, the test result of the test sample No. 7 as the comparative sample with the metallic plating layer 70 on the handle body 2 was not good, showing low Q (5.7) of the antenna coil, in other words, high loss of the antenna output.

As mentioned above, the test sample No. 2 based on the present invention shows good Q value while the test samples No. 3 and No. 7 with the metallic plating layer 70 do not show good Q value. The reason is assumed as follows. Skin depth means a depth at which electromagnetic field strength of the electromagnetic wave entering a material becomes 1/e ($e\cong2.718$). Here, the skin depth d is described as following (eq. 1) with permeability $\mu$ and conductivity $\sigma$ ($\sigma=1/\rho$) of the material, and frequency f of incident electromagnetic wave.

$$d=1/\sqrt{(\pi f \mu \sigma)} \qquad \text{(eq. 1)}$$

According to (eq. 1), the lower conductivity $\sigma$, the lower permeability $\mu$, and the lower frequency f yields the deeper skin depth. On the contrary, according to (eq. 1), the higher conductivity $\sigma$, the higher permeability $\mu$, and the higher frequency f yields the shallower skin depth.

Therefore, in order to decrease decay of the electromagnetic wave, a metallic layer portion (corresponding to the metallic microparticle paint layer 66 and the metallic plating part 70) of the decorative layer 6 with high resistance and low conductivity is assumed to be preferable. Further, in order to decrease the decay of the electromagnetic wave, the metallic layer portion formed with weak paramagnetic metal with low permeability is assumed to be preferable.

As mentioned above, a method for forming the thin metallic microparticle paint layer 66 with the paint including the metallic microparticle has advantages over a method for forming the metallic plating layer to obtain discontinuity of the metallic microparticle paint layer 66 in surface direction because of high interface resistance and because there is a gap between the adjacent metallic microparticles.

In addition, the metallic microparticle paint layer 66 is assumed to have further advantage to prevent decay of electromagnetic wave according to (eq.1) because the metallic particle included in the metallic microparticle paint layer 66 is not formed of ferromagnetic nickel with high permeability but paramagnetic (nonmagnetic) aluminum series material with low permeability.

Further, a sensor performance as a capacitance type sensor of the door handle apparatus (the test samples No. 1-No. 7) including the sensor electrode 36 was measured. Here, changes of capacitance of the test samples made similarly to the door handle apparatus were measured. $\Delta C_p$ indicates the capacitance of the door handle apparatus touched by hand minus the initial capacitance of the door handle apparatus. The initial capacitance is measured in condition that the door handle apparatus is not touched by hand. Fig. 11 shows test result of the capacitance change $\Delta C_p$. As shown in Fig. 11, the performance of the test sample No. 2 based on the present invention as the capacitance type sensor was similar or superior to that of the other test samples (test sample No. 1, test sample No.3, test sample No. 6).

As seen from above results, the test samples No. 2, No. 4, and No. 5 based on the present invention have similar antenna performance and sensor performance to that of the test sample No. 1 as the comparative sample. In addition, the test samples No. 2, No. 4, and No. 5 based on the present invention shows shininess and metallic luster which contribute to good design of the handle apparatus.

The antenna portion 3 is not limited to transmitter of electromagnetic wave as in the embodiment described above, but may be receiver of electromagnetic wave. The core portion 30 is not limited to Mn-Ni ferrite employed in the embodiment but may be Cu-Zn ferrite, Ni-Zn ferrite, Cu-Zn-Mg ferrite, and Mn-Zn ferrite, further, a magnetic core which is not ferrite. The antenna portion 3 includes the sensor electrode 36 in the embodiment, but the antenna portion 3 may not include the sensor electrode 36. The decorative layer 6 of the cover 4 is not limited to the structure of the test sample 2 mentioned above including the undercoat layer 60 formed on the surface of the cover, the metallic microparticle paint layer 66 as the surfacer layer formed on the undercoat layer 60, and the topcoat layer 64 formed on the metallic microparticle paint layer 66. The decorative layer 6 of the cover may not include the undercoat layer 60. Further, a second topcoat layer may be formed.

From the above description, following scope can be covered.

(additional term 1) A design component with an antenna function, comprising:

a cover mainly made of resin having a design layer decorated metallic like color tone formed on a body such as a handle body attached to components such as a door or the like;
an antenna portion attached to a space formed between the body such as the handle body and the cover having at least one of transmitting function and receiving function, wherein the cover includes a metallic microparticle paint layer formed of metallic microparticles.

In this case, a design member having the antenna function has metallic luster and merit of decreasing loss of an antenna output.

(additional term 2) A door handle apparatus, comprising:

a handle body attached to a door;
a shiny design layer decorated metallic like color tone attached to the handle body;
a cover mainly made of resin; and
an antenna portion attached to a space formed between the handle body and the cover having at least one of transmitting or receiving function; wherein the handle body has metallic luster and is mainly made of resin, and the decorative layer of the handle body includes a metallic microparticle paint layer deposited with metallic micro particles by painting.

(additional term 3) A door handle apparatus according to any one of additional terms 1-2, further comprising:

a sensor electrode with conductivity.

The present invention may be adapted to a door handle apparatus for a vehicle such as automobile and a door of a building.

The metallic microparticle may be flat shape, spherical shape, fiber shape, and particle shape, or the like. Examples of size of the metallic microparticle may be 0.1-50 micrometer, 1-40 micrometer, and 5-30 micrometer in average particle diameter.

Further, the antenna portion may include a core portion and a conductor wire portion provided at the core portion. The antenna portion may be structured that the core portion is inserted into the coil-shaped conductor wire. In this case, when supplying electricity to the coil shaped conductor wire for generating magnetic flux at an inside of the core portion and generating magnetic field in space, the antenna works as the antenna transmitting electromagnetic wave. When receiving electromagnetic wave, a current corresponding to the magnetic flux generated in the core portion is induced at the coil-shaped conductor wire, then the antenna portion works as an antenna for receiving the electromagnetic wave. The shape of the core portion may be, but not limited to, a plate shape such as a rectangle plate, bar shape such as square bar and round bar. The core portion may be basically made of, but not limited to, metallic magnetic material such as iron oxide such as ferrite, magnetic material, and amorphous alloy. Material of the conductor wire provided to the core portion may be any material with conductivity.

The cover according to the aspect of the present invention is basically formed of resin components. Resin material may be, but not limited to, either one of thermosetting resin and thermoplastic resin. Particularly, resin material may be, but not limited to, polycarbonate resin (PC), polybutylene terephthalate resin (PBT), polyamide (PA) resin, polyphenylene oxide resin, polyacetal resin, and acrylonitrile butadiene stylene resin. The resin components may be include a reinforcing fiber such as a glass fiber. The handle body may be preferable to be also basically formed of resin components.

According to further aspect of the door handle, the topcoat layer is formed on the metallic microparticle paint layer. In this case, the metallic luster, protectiveness, and durability of the metallic microparticle paint layer may be increased, and the decorative layer may be maintained in good state for a long period.

According to further aspect of the present invention, an average thickness of the metallic microparticle paint layer is 0.1-40 micrometer. The metallic microparticle paint layer in such thickness has an advantage for forming the discontinuous part in the cross-section in thickness direction of the metallic microparticle paint layer. As mentioned above, the partially discontinuous part has an advantage to reduce a loss of the antenna output. The upper limit of the average thickness of the metallic microparticle paint layer may be 30 micrometer, 20 micrometer, 10 micrometer, further 10 micrometer, 5 micrometer, although depending on the size of the metallic microparticle. If the average thickness of the metallic microparticle paint layer is too thin, the shininess and metallic luster can not be obtained. The lower limit which may be combined to the upper limit described above is 0.1 micrometer, 0.2 micrometer, and 0.5 micrometer. Accordingly, the average thickness of the metallic microparticle paint layer may be 0.1-30 micrometer, 0.1-20 micrometer, and 0.1-10 micrometer.

According to the further aspect of the door handle apparatus, material of metallic microparticle is either one of aluminum or aluminum alloy. In this case, the aluminum or the aluminum alloy has advantages of forming the shiny design layer. Aluminum or aluminum alloy is paramagnetic (nonmagnetic) generally with low permeability.

Further, according to the preferred embodiment of the present invention of the door handle apparatus, a conductive sensor electrode may be provided. In this case, when the object approach to or contacts with the sensor electrode, and the presence of the object is detected. The sensor electrode may be a capacitance type sensor electrode for detecting the change of the capacitance. Thus, when the sensor electrode is used as the capacitance sensor electrode, the sensor electrode detects the presence of the object by the capacitance change of the sensor electrode in accordance with approaching of object.

According to the door handle apparatus based on the present invention, the decorative layer described above may be formed on not only the cover but also the handle body.

According to further aspect of the present invention, the shiny design layer of the cover is obtained by depositing the microparticles and forming the metallic microparticle paint layer by painting method. Further, according to the aspect of the present invention, the handle apparatus has advantages of reducing loss of the antenna output as well as the shiny metallic design.

A door handle apparatus includes a handle body (2) attached to a door, a cover (4) made of resin attached to the handle body and including a design layer (6) decorated metallic like color tone and an antenna portion (3) attached to a space formed between the handle body and the cover and having at least one of transmitting function and receiving function. The decorative layer of the cover includes a metallic microparticle paint layer (66) formed by depositing metallic microparticles by painting.

## Claims

1. A door handle apparatus comprising:

    a handle body (2) attached to a door;
    a cover (4) made of resin attached to the handle body and including a design layer (6) decorated metallic like color tone; and
    an antenna portion (3) attached to a space formed between the handle body and the cover and having at least one of transmitting function and receiving function

    **characterized in that**
    the decorative layer of the cover includes a metallic microparticle paint layer (66) formed by depositing metallic microparticles by painting.

2. The door handle apparatus according to Claim 1, wherein
the metallic microparticle paint layer partially includes a discontinuous portion (66c) at a cross-sectional surface of the decorative layer of the cover in thickness direction.

3. The door handle apparatus according to Claim 1, wherein
a transparent topcoat layer (64) is formed on the metallic microparticle paint layer.

4. The door handle apparatus according to Claim 1, wherein
an average thickness of the metallic microparticle paint layer is 0.1-40 micrometer.

5. The door handle apparatus according to Claim 1, wherein

the metallic microparticle is made of aluminum or aluminum alloy.

6. The door handle apparatus according to Claim 1, wherein the metallic microparticle is a flat-shaped microparticle.

7. The door handle apparatus according to Claim 1, wherein the metallic microparticle is made of paramagnetic microparticle.

8. The door handle apparatus according to Claim 1, wherein an average particle diameter of the metallic microparticle is 5-30 micrometer.

9. The door handle apparatus according to Claim 1, wherein the metallic microparticle paint layer is formed by spray painting.

10. The door handle apparatus according to Claim 1, wherein the metallic microparticle paint layer includes the metallic microparticle and resin.

# FIG. 1

# FIG. 2

# FIG. 3

# FIG. 4

# F I G. 5

(×1, 000)

Embedding resin

Al distribution →

15.8μm    14.6μm

64

2.0μm    66

20.5μm    20.2μm

60

Base resin

SEI    15.0kV    10μm

F I G. 6

# F I G. 7

# FIG. 8

| | | Shininess | Antenna output ※1 (dB μV/m) | | Q value of antenna coil | |
|---|---|---|---|---|---|---|
| Comparative sample | No.1 | ✗ | 0.00 | O | 29.7 | O |
| Present invention | No.2 | O | 0.00 | O | 29.5 | O |
| Comparative sample | No.3 | O | 1.30 | O | 11.0 | ✗ |
| Present invention | No.4 | O | 0.10 | O | 29.2 | O |
| Present invention | No.5 | O | 0.00 | O | 29.7 | O |
| Comparative sample | No.6 | ✗ | −0.10 | O | 26.5 | O |
| Comparative sample | No.7 | O | −2.10 | ✗ | 5.7 | ✗ |

※1 Ratio of the antenna output to the antenna output of free space (No. 1)

# F I G. 9

# F I G. 10

# F I G. 11

**European Patent Office**

## EUROPEAN SEARCH REPORT

Application Number

EP 04 02 3065

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 672 410 A (BENOIT DENNIS R ET AL) 30 September 1997 (1997-09-30) * claims 1-6,10; figures 1-6 * | 1-4,8 | B44C1/14 |
| A | PATENT ABSTRACTS OF JAPAN vol. 2003, no. 12, 5 December 2003 (2003-12-05) -& JP 2003 221946 A (ALPHA CORP), 8 August 2003 (2003-08-08) * abstract * | 1 | |
| D,A | PATENT ABSTRACTS OF JAPAN vol. 2002, no. 06, 4 June 2002 (2002-06-04) & JP 2002 036799 A (KYOWA ELECTRIC & CHEM CO LTD), 6 February 2002 (2002-02-06) * abstract * | 1-3 | |
| A | PATENT ABSTRACTS OF JAPAN vol. 2002, no. 08, 5 August 2002 (2002-08-05) & JP 2002 121892 A (FUJIKKUSU KENSETSU KK), 26 April 2002 (2002-04-26) * abstract * | 1-3 | TECHNICAL FIELDS SEARCHED (Int.Cl.7) |
| A | WO 96/39307 A (FLEX PRODUCTS INC) 12 December 1996 (1996-12-12) * claims 1,4-6,17 * | 1-3 | B44C E05B B60R B22F |

The present search report has been drawn up for all claims

| Place of search | Date of completion of the search | Examiner |
|---|---|---|
| Berlin | 18 January 2005 | Thomas, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 3065

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2005

| Patent document cited in search report | | Publication date | Patent family member(s) | | Publication date |
|---|---|---|---|---|---|
| US 5672410 | A | 30-09-1997 | AT | 162207 T | 15-01-1998 |
| | | | AU | 4247793 A | 13-12-1993 |
| | | | CA | 2135622 A1 | 25-11-1993 |
| | | | DE | 69316359 D1 | 19-02-1998 |
| | | | DE | 69316359 T2 | 30-04-1998 |
| | | | EP | 0643745 A1 | 22-03-1995 |
| | | | JP | 8502301 T | 12-03-1996 |
| | | | WO | 9323481 A1 | 25-11-1993 |
| | | | US | 5650248 A | 22-07-1997 |
| | | | US | 5624076 A | 29-04-1997 |
| | | | US | 6666995 B1 | 23-12-2003 |
| | | | US | 6068691 A | 30-05-2000 |
| JP 2003221946 | A | 08-08-2003 | NONE | | |
| JP 2002036799 | A | 06-02-2002 | NONE | | |
| JP 2002121892 | A | 26-04-2002 | NONE | | |
| WO 9639307 | A | 12-12-1996 | US | 5766738 A | 16-06-1998 |
| | | | AU | 706105 B2 | 10-06-1999 |
| | | | AU | 5802496 A | 24-12-1996 |
| | | | CA | 2219784 A1 | 12-12-1996 |
| | | | CN | 1186467 A ,B | 01-07-1998 |
| | | | EP | 1491358 A2 | 29-12-2004 |
| | | | EP | 0914261 A1 | 12-05-1999 |
| | | | HK | 1010859 A1 | 01-11-2002 |
| | | | JP | 10512974 T | 08-12-1998 |
| | | | JP | 3302696 B2 | 15-07-2002 |
| | | | WO | 9639307 A1 | 12-12-1996 |
| | | | US | 6114018 A | 05-09-2000 |

EPO FORM P0459

For more details about this annex : see Official Journal of the European Patent Office, No. 12/82